# FASCICULE DE BREVET EUROPEEN

(11) **EP 0 425 327 B1**
(45) Date de publication et mention de la délivrance du brevet: **25.05.1994**
(21) Numéro de dépôt: 90402679.6
(22) Date de dépôt: 28.09.1990
(51) Int. Cl.: F02M 21/02, F02M 63/00

(54) **Injecteur électromagnétique d'un fluide gazeux pour moteur à combustion interne**
Elektromagnetisches Gaseinspritzventil für Brennkraftmaschine
Electromagnetic gas injector for an internal combustion engine

(30) Priorité: 23.10.1989 FR 8913854
(43) Date de publication de la demande: 02.05.1991
(73) Titulaire: REGIE NATIONALE DES USINES RENAULT, 92109 Boulogne-Billancourt (FR)
(72) Inventeur: Hauet, Bertrand, F-92130 Issy-Les-Moulineaux (FR); Ozenfant, Christian, F-78340 Les-Clayes-sous-Bois (FR); Cliville, François, F-76410 Cleon (FR)
(74) Mandataire: Ernst-Schonberg, Michel

(56) Documents cités:
- FR-A- 866 403
- FR-A- 2 079 805
- FR-A- 2 088 701
- GB-A- 564 711
- PATENT ABSTRACTS OF JAPAN vol. 7, no. 240 (M-251)(1385) 25 octobre 1983, & JP-A-58 128588
- INTERNATIONAL JOURNAL OF HYDROGEN ENERGY. vol. 7, no. 10, 1982, OXFORD GB pages 809 - 820; Furuhama and Kobayashi: "A liquid hydrogen car with a two-stroke direct injection engine and LH2-pump"

## Description

La présente invention concerne un injecteur électromagnétique de fluide gazeux destiné notamment à équiper un moteur à combustion interne, par exemple un moteur pour véhicule automobile.

Des constructeurs de véhicules automobiles sont actuellement de plus en plus concernés par les problèmes de pollution atmosphérique causée par des gaz d'échappement de véhicules automobiles. L'utilisation de pots catalytiques d'échappement devient de plus en plus répandue pour supprimer en grande partie l'émission des gaz nocifs, tels que le monoxyde de carbone et les oxydes d'azote, dans les gaz d'échappement des véhicules automobiles.

Cependant, les pots catalytiques d'échappement sont totalement passifs vis-à-vis du fonctionnement des moteurs qui leur sont reliés, et ne permettent de traiter que les gaz après combustion évacués par les moteurs correspondants.

On sait que la cause principale des émissions de gaz nocifs est due à une mauvaise combustion de carburant à l'intérieur du moteur. Une solution active de lutte contre la pollution due aux gaz d'échappement des véhicules automobiles consiste donc à améliorer la combustion du carburant dans les moteurs desdits véhicules automobiles.

Parmi les travaux récents avancés dans ce domaine, on peut citer deux demandes de brevets français n° 89 10 440 et n° 89 10 441 de la demanderesse dans lesquelles des structures particulières des chambres de combustion ont été proposées pour un moteur à combustion interne, en particulier pour un moteur à injection directe de carburant.

On peut également citer le brevet JP-A-58-128588 (KOGYO) qui décrit un injecteur électromagnétique de fluide gazeux comportant une partie de commande constituée par un électro aimant et un élément mobile, une partie d'injection constituée par une aiguille et son siège et une partie intermédiaire reliant mécaniquement les parties de commande et d'injection.

La présente invention a pour objet principal la réalisation d'un injecteur électromagnétique de fluide gazeux pouvant être monté de façon communicante avec une chambre de combustion d'un moteur à combustion interne pour créer un mouvement particulier du gaz comburant à l'intérieur de la chambre de combustion.

Plus particulièrement, l'invention a pour objet un injecteur de gaz pour un moteur multicylindre d'un véhicule automobile et qui permet d'optimiser la combustion du carburant dans la chambre de combustion du moteur et de réduire l'émission de gaz polluants par ledit moteur.

L'invention a également pour objet un injecteur électromagnétique de gaz susceptible d'être utilisé dans tout autre secteur de l'industrie.

La présente invention résulte d'une conception originale selon laquelle l'injection d'un flux gazeux supplémentaire, en plus de l'air introduit par des soupapes d'admission, à l'intérieur d'une chambre de combustion permet de créer un régime turbulent, partiel ou total du gaz comburant à l'intérieur de la chambre, ce qui peut conduire à une combustion optimale du carburant et donc une meilleure performance du moteur et une réduction de l'émission de gaz nocifs, tels que le monoxyde de carbone, les oxydes d'azote et les hydrocarbures imbrûlés, à l'échappement.

L'injecteur électromagnétique de fluide gazeux, selon l'invention comprend :
- une partie de commande constituée par un électroaimant et un élément mobile ;
- une partie d'injection constituée par une aiguille et son siège ;
- une partie intermédiaire reliant mécaniquement lesdites parties de commande et d'injection.

Selon l'invention ladite partie intermédiaire est pourvue d'une entrée d'un gaz sous pression pour la partie d'injection, et d'une seconde entrée d'un lubrifiant pour la partie de commande et en ce que l'injecteur électromagnétique est caractérisé en ce que lesdites parties étant assemblées de telle sorte que lorsque l'électro-aimant n'est pas excité, l'élément mobile est en contact mécanique avec le siège en formant un moyen d'étanchéité qui empêche le gaz sous pression de passer dans la partie d'injection, et que lorsque l'électro-aimant est excité, l'élément mobile est sans contact avec le siège pour permettre l'entrée du gaz sous pression dans la partie d'injection, l'élément mobile formant un premier moyen d'étanchéité au gaz avec la face d'extrémité du siège, opposée à celle qui forme avec une extrémité de l'aiguille, un second joint étanche au gaz.

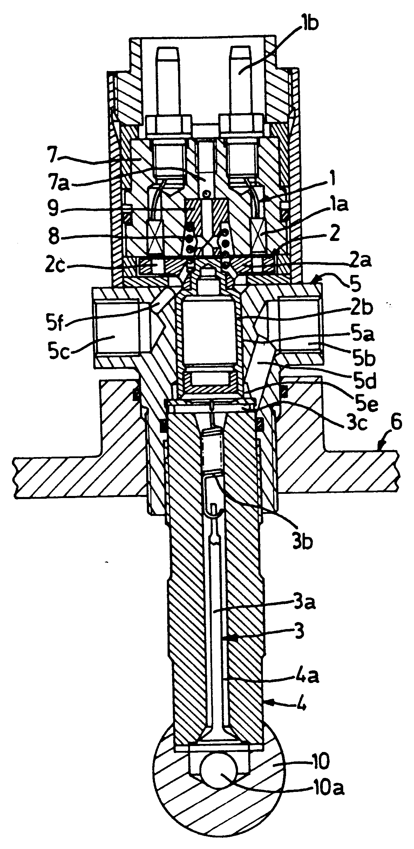

L'invention sera mieux comprise à l'étude de la description détaillée d'un mode de réalisation particulier de l'invention pris à titre d'exemple nullement limitatif et illustré par le dessin unique annexé qui représente une vue en coupe axiale d'un injecteur électromagnétique de fluide gazeux selon l'invention.

Tel qu'il est illustré sur la figure unique, l'injecteur électromagnétique, disposé verticalement, présente une forme allongée dont la section est circulaire d'une manière générale. L'injecteur est constitué essentiellement d'une partie de commande et d'une partie d'injection. La partie de commande comprend un électro-aimant 1 et un élément mobile 2. La partie d'injection comprend une aiguille verticale 3 et son siège tubulaire 4.

L'injecteur comprend en outre une partie intermédiaire 5 reliant mécaniquement les parties de commande et d'injection, et servant de moyen de montage de l'injecteur sur un support 6.

L'électro-aimant 1 est constitué par une bobine 1a encastrée dans un élément de fixation 7 et de deux prises électriques 1b disposées verticalement à l'extrémité supérieure de l'injecteur. L'élément mobile 2 comporte un plateau circulaire 2a et un piston 2b vertical solidaire du plateau 2a. Un ressort de compression 8 est centrée entre l'élément de fixation 7 au moyen d'une pièce de centrage 9, et l'élément mobile 2 par la partie d'extrémité supérieure du piston 2b débouchant dans une ouverture centrale du plateau 2a.

La partie intermédiaire 5 présente un passage cylindrique central 5a vertical dont la partie supérieure coopère avec le piston 2b pour permettre un mouvement de montée et de descente de ce dernier. Les prises électriques 1b sont connectées à un moyen de commande électrique, non représenté sur la figure, qui pilote l'injecteur.

Le ressort 8 est toujours en compression et exerce une force mécanique verticale sur l'élément mobile 2, ce qui signifie que lorsque l'électro-aimant 1 n'est pas excité, le piston 2b se trouve dans une position inférieure.

Lorsque l'électro-aimant 1 est excité, la force magnétique exercée sur l'élément mobile 2 est supérieure à la force mécanique du ressort 8. L'élément mobile 2 est alors attiré vers le haut jusqu'à une position supérieure délimitée par la face inférieure de l'élément de fixation 7.

La partie intermédiaire 5 comprend une première entrée radiale 5b de gaz sous pression et une seconde entrée radiale 5c de lubrifiant sous pression. L'entrée de gaz 5b communique, par l'intermédiaire d'un canal 5d, avec une chambre annulaire 5e formée par la paroi extérieure de la partie inférieure du piston 2b, la face d'extrémité supérieure du siège 4 et une portion du passage cylindrique 5a de la pièce intermédiaire 5.

A la position inférieure du piston 2b, l'extrémité inférieure du piston est butée contre la face de l'extrémité supérieure du siège 4 et assure l'étanchéité entre la chambre 5e et un passage vertical 4a du siège 4 autour de l'aiguille 3. A la position supérieure du piston 2b lorsque l'électro-aimant 1 est excité, l'extrémité inférieure du piston 2b n'est plus en contact avec la face de l'extrémité supérieure du siège 4. Il en résulte que la chambre 5e communique avec le passage 4a autour de l'aiguille 3.

L'aiguille 3 comprend une tige cylindrique 3a dont la partie supérieure est reliée mécaniquement à un ressort de rappel axial 3b et dont la partie inférieure s'évase vers le bas sous forme conique. Au voisinage de l'extrémité supérieure du siège 4 est montée de façon étanche une barrette horizontale 3c sur laquelle est accroché le ressort de rappel 3b.

L'extrémité supérieure du passage 4a est de section inférieure à la section du piston 2b. L'extrémité inférieure du passage 4a s'évase vers le bas sous forme tronconique. En position de repos de l'aiguille 3, le ressort de rappel 3b exerce une force mécanique ascendante sur la tige 3a dont l'extrémité inférieure conique forme un joint étanche au gaz avec l'extrémité inférieure du passage 4a du siège 4, comme un clapet anti-retour.

Le gaz sous pression étant introduit dans la chambre annulaire 5e par l'intermédiaire de la première entrée 5b et du canal de liaison 5d, la force mécanique du ressort de compression 8 maintient le piston 2b à sa position inférieure en empêchant au gaz de passer dans le passage 4a. Lorsque l'électro-aimant 1 est excité, le piston 2 est attiré vers le haut en laissant alors le gaz arriver dans le passage 4a. La pression de gaz est suffisamment grande pour vaincre l'effort de rappel du ressort 3b et entraîner la tige 3a vers le bas en permettant au gaz de s'échapper à la partie inférieure de l'injecteur.

On voit donc que le choix du ressort de compression 8, du ressort de rappel 3b, et de l'électro-aimant 1 est important pour assurer un bon fonctionnement de l'injecteur. Le gaz à injecter doit avoir une pression supérieure à une pression limite.

Un lubrifiant introduit par la seconde entrée 5b traverse un canal de liaison 5f vers l'élément mobile 2. L'élément mobile 2 est pourvu d'une pluralité de perforations 2c pour le passage du lubrifiant. La pièce de centrage 9 est aussi pourvue de passages de lubrifiant pour l'évacuer vers le haut à travers un passage cylindrique 7a pratiqué dans l'élément de fixation 7. La lubrification permet une plus grande efficacité d'actionnement de l'injecteur.

Selon une variante de l'invention, l'injecteur peut être équipé à sa partie inférieure d'une bille de raccord 10. Cette bille de raccord est pourvue d'une dépression pour la fixation de l'extrémité inférieure de l'injecteur et d'un canal de sortie 10a communiquant avec un moyen extérieur.

Parmi de nombreuses possibilités d'application de l'injecteur de l'invention, on s'intéresse plus particulièrement à son application à des moteurs multicylindres pour véhicules autombiles.

Pour une chambre de combustion d'un moteur donné, on peut installer au moins un injecteur de l'invention dans le but d'injecter directement un gaz à l'intérieur de la chambre de combustion et cela indépendamment des soupapes d'admission du moteur. Selon l'orientation de l'injecteur par rapport au mouvement de l'air dans le cylindre correspondant du moteur, le gaz ainsi injecté peut créer une turbulence locale ou globale dans la chambre de combustion pour permettre une combustion plus complète du carburant.

Plusieurs cas peuvent être envisagés. Le premier consiste à injecter, à l'aide de l'injecteur de l'invention, de l'air comprimé à l'intérieur de la chambre. La combustion optimale grâce à la turbulence locale ou globale ainsi créée dans la chambre de combustion a pour conséquence un meilleur rendement du moteur, une réduction de consommation de carburant, une diminution de la proportion de gaz imbrûlés dans l'échappement et une diminution possible de la richesse globale à faibles charges du moteur tout en conservant un niveau de stabilité très satisfaisant.

Le second cas consiste à injecter dans la chambre de combustion, de l'air comprimé mélangé avec de l'hydrogène pour favoriser l'allumage et la combustion du carburant.

Le troisième cas consiste à injecter un gaz inhibiteur dans la chambre de combustion pour limiter la formation d'oxydes d'azote rejetés à l'échappement, ce gaz inhibiteur pouvant être constitué par le gaz d'échappement du moteur.

On peut également envisager d'introduire de l'air comprimé avec une faible teneur de carburant qui sera pulvérisé en fines gouttelettes pour favoriser la combustion à l'intérieur de la chambre de combustion.

Le lubrifiant peut être de préférence constitué du carburant utilisé par le moteur, ce qui permet d'éviter une éventuelle pollution causée par la fuite du lubrifiant vers l'intérieur de la chambre de combustion. Le lubrifiant peut également assurer partiellement au moins le refroidissement de l'injecteur.

L'injecteur de l'invention peut être connecté à une unité centrale qui permet de piloter l'injection de gaz sur une durée variable, donc à un débit variable, à une phase variable, donc à n'importe quel moment du cycle de fonctionnement du moteur et de pouvoir ainsi modifier à tout moment la turbulence locale ou globale, la richesse locale et globale dans les phases de préparation, de déroulement ou de fin de combustion.

Pour une chambre de combustion donnée, on peut monter un ou plusieurs injecteurs de l'invention dans l'objectif d'avoir un moteur aussi propre et aussi performant que possible, les injecteurs pouvant injecter des gaz de nature différente. Il n'est pas indispensable que l'injecteur débouche directement dans la chambre de combustion, l'injection de gaz à l'intérieur de la chambre de combustion peut être assurée par une buse communiquant avec la sortie de l'injecteur et débouchant dans la chambre de combustion.

L'unité de pilotage de l'injecteur de l'invention peut être reliée à des moyens de détection appropriés qui déterminent à tout moment le point mort haut de chaque cylindre du moteur, l'angle de calage des cylindres et la vitesse de rotation du moteur par exemple. Il en résulte que l'injecteur peut être piloté en fonction du régime du moteur et de la charge demandée par le conducteur du véhicule pour assurer un bon fonctionnement du moteur, notamment une combustion optimum du carburant et une émission réduite de polluants.

## Revendications

1. Injecteur électromagnétique de fluide gazeux, comprenant :
- une partie de commande constituée par un électro-aimant (1) et un élément mobile (2),
- une partie d'injection constituée par une aiguille (3) et son siège (4),
- une partie intermédiaire (5) reliant mécaniquement lesdites parties de commande et d'injection,
caractérisé en ce que ladite partie intermédiaire est pourvue d'une première entrée (5b) d'un gaz sous pression pour la partie d'injection, et d'une seconde entrée (5c) d'un lubrifiant pour la partie de commande et en ce que lesdites parties étant assemblées de telle sorte que lorsque l'électro-aimant (1) n'est pas excité, l'élément mobile (2) est en contact mécanique avec le siège (4) en formant un moyen d'étanchéité qui empêche le gaz sous pression de passer dans la partie d'injection, et que lorsque l'électro-aimant (1) est excité, l'élément mobile (2) est sans contact avec le siège (4) pour permettre l'entrée du gaz sous pression dans la partie d'injection (1), l'élément mobile (2) formant un premier moyen d'étanchéité au gaz avec la face d'extrémité du siège (4), opposée à celle qui forme avec une extrémité de l'aiguille (3), un second joint étanche au gaz.

2. Injecteur électromagnétique selon la revendication 1, caractérisé par le fait que la partie de commande comprend un ressort de compression (8) centré d'une part par une pièce de centrage (9) se trouvant à l'intérieur d'un élément de fixation (7) dans lequel est monté l'électro-aimant (1), et d'autre part par l'élément mobile (2), le ressort de compression (8) exerçant une force mécanique permanente sur l'élément mobile (2) en le maintenant dans une position déterminée lorsque l'électro-aimant n'est pas excité.

3. Injecteur électromagnétique selon la revendication 1 ou 2, caractérisé par le fait que l'aiguille (3) est constituée par une tige cylindrique (3a) reliée à un ressort de rappel (3b) dont une extrémité est fixe par rapport au siège (4), et que le siège de la partie d'injection est sensiblement tubulaire et forme avec l'aiguille (3) un clapet anti-retour.

4. Injecteur électromagnétique selon l'une quelconque des revendications précédentes, caractérisé par le fait que l'élément mobile (2) est constitué par un plateau circulaire (2a) et un piston (2b) rendu solidaire l'un de l'autre, et qu'une extrémité du piston (2b) coopère avec une extrémité du siège (4) de la partie d'injection pour constituer un moyen d'ouverture et de fermeture du passage du gaz sous pression depuis une chambre annulaire (5e) communicante avec la première entrée (5b), vers la partie d'injection.

5. Injecteur électromagnétique selon l'une des revendications précédentes, caractérisé par le fait qu'il comprend en outre des moyens de montage permettant sa fixation sur un support (6).

6. Utilisation de l'injecteur défini dans l'une quelconque des revendications précédentes pour l'injection d'un gaz soit directement, soit indirectement dans une chambre de combustion d'un moteur à combustion interne.

7. Procédé d'optimisation de la combustion d'un carburant à l'intérieur d'une chambre de combustion d'un moteur à combustion interne par l'utilisation d'au moins un injecteur selon une des revendications 1 à 5 pour injecter à un moment déterminé du cycle de fonctionnement du moteur, une quantité déterminée d'un gaz sous pression, de façon à créer une turbulence locale ou globale dans la chambre de combustion et/ou à modifier la richesse locale du carburant dans la chambre.

8. Utilisation de l'injecteur défini dans l'une quelconque des revendications 1 à 5 pour l'injection d'un mélange air-carburant.

## Patentansprüche

1. Elektromagnetisches Einspritzventil für ein gasförmiges Fluid, mit:
- einem Steuerabschnitt, der aus einem Elektromagneten (1) und einem beweglichen Teil (2) besteht;
- einem Einspritzabschnitt, der aus einer Nadel (3) und einem Sitz (4) besteht;
- einem Zwischenabschnitt (5), der mechanisch den Steuerabschnitt mit dem Einspritzabschnitt verbindet;
dadurch gekennzeichnet, daß der Zwischenabschnitt mit einem ersten Einlaß (5b) versehen ist, für ein unter Druck stehendes Gas für den Einspritzabschnitt und mit einem zweiten Einlaß (5c) versehen ist für ein Schmiermittel für den Steuerabschnitt und daß diese Abschnitte dergestalt vereint sind, daß, wenn der Elektromagnet (1) nicht erregt ist, das bewegliche Teil (2) mit dem Sitz (4) in mechanischem Kontakt steht und eine Abdichtanordnung bildet, welche die Zufuhr des unter Druck stehenden Gases in den Einspritzabschnitt verhindert und daß, wenn der Elektromagnet (1) erregt ist, das bewegliche Teil (2) keinen Kontakt mit dem Sitz (4) hat, um die Zufuhr von unter Druck stehendem Gas in den Einspritzabschnitt (1) zu ermöglichen, wobei das bewegliche Teil (2) eine erste gasdichte Abdichtanordnung mit der Endfläche des Sitzes (4) bildet, die derjenigen gegenüber liegt, die mit einem Ende der Nadel (3) eine zweite gasdichte Dichtung bildet.

2. Elektromagnetisches Einspritzventil nach Anspruch 1, dadurch gekennzeichnet, daß der Steuerabschnitt eine Druckfeder (8) aufweist, die zwischen einem Zentrierteil (9) einerseits, das im Inneren eines Befestigungsteils (7) angeordnet ist, in dem der Elektromagnet (1) befestigt ist und einem beweglichen Teil (8) andererseits zentriert ist, wobei die Druckfeder (2) eine permanente mechanische Kraft auf das bewegliche Teil (2) aufübt und dieses in einer vorgegebenen Stellung hält, wenn der Elektromagnet nicht erregt ist.

3. Elektromagnetisches Einspritzventil nach Anspruch 1 oder 2, dadurch gekennzeichnet, daß die Nadel (3) aus einem zylindrischen Stab (3a) besteht, der mit einer Rückholfeder (3b) verbunden ist, deren eines Ende bezüglich des Sitzes (4) festliegt und daß der Sitz des Einspritzabschnitts im wesentlichen rohrförmig ist und zusammen mit der Nadel (3) ein Rückschlagventil bildet.

4. Elektromagnetisches Einspritzventil nach einem der vorhergehenden Ansprüche, dadurch gekennzeichnet, daß das bewegliche Teil (2) aus einer kreisförmigen Platte (2a) und einem Kolben (2b) besteht, die fest miteinander verbunden sind und daß ein Ende des Kolbens (2b) mit einem Ende des Sitzes (4) des Einspritzabschnitts zusammenwirkt, um eine Öffnungs- und Schließanordnung für den Durchlaß des unter Druck stehenden Gases zu bilden, von einer ringförmigen Kammer (5e), die mit dem ersten Einlaß (5b) in Richtung Einspritzabschnitt in Verbindung steht.

5. Elektromagnetisches Einspritzventil nach einem der vorhergehenden Ansprüche, dadurch gekennzeichnet, daß es außerdem eine Montageanordnung zur Befestigung an einer Halterung (6) aufweist.

6. Verwendung eines Einspritzventils nach einem der vorhergehenden Ansprüche zum direkten oder indirekten Einführen von Gas in die Verbrennungskammer einer Brennkraftmaschine.

7. Verfahren zur Optimierung der Verbrennung eines Kraftstoffes im Inneren einer Verbrennungskammer einer Brennkraftmaschine durch Verwendung wenigstens eines Einspritzventils nach einem der Ansprüche 1 bis 5, um in einem vorgegebenen Zeitpunkt des Betriebszyklus des Motors eine vorgegebene Menge eines unter Druck stehenden Gases dergestalt einzuführen, daß eine örtliche oder vollständige Turbulenz in der Verbrennungskammer und/oder eine Veränderung der örtlichen Anreicherung des Kraftstoffes in der Kammer erzeugt wird.

8. Verwendung des in einem der Ansprüche 1 bis 5 beschriebenen Einspritzventils zum Einspritzen eines Luft-Kraftstoff-Gemisches.

## Claims

1. Electromagnetic gaseous fluid injector comprising:
- a control portion formed by an electromagnet (1) and a moving member (2),
- an injection portion formed by a needle (3) and its seat (4),
- an intermediate portion (5) mechanically connecting these control and injection portions,
characterized in that the intermediate portion is provided with a first input (5b) for a pressurized gas for the injection portion and a second input (5c) for a lubricant for the control portion and in that these portions are assembled so that when the electromagnet (1) is not excited the moving member (2) is in mechanical contact with the seat (4) thereby forming a sealing means which prevents the pressurized gas from passing into the injection portion and in that when the electromagnet (1) is excited, the moving member (2) is not in contact with the seat (4) in order to allow the pressurized gas to enter the injection portion (1), the moving member (2) forming a first gasproof means with the end surface of the seat (4) opposite that which forms, with one end of the needle (3), a second gasproof joint.

2. An electromagnetic injector as claimed in claim 1, characterized in that the control portion comprises a compression spring (8) centred, on one hand, by a centring member (9) disposed inside a fastening member (7) in which the electromagnet (1) is mounted and, on the other hand, by the moving member (2), the compression spring (8) exerting a permanent mechanical force on the moving member (2) thereby maintaining it in a predetermined position when the electromagnet is not excited.

3. An electromagnetic injector as claimed in claim 1 or 2, characterized in that the needle (3) is formed by a cylindrical rod (3a) connected to a recall spring (3b) one end of which is fixed with respect to the seat (4) and in that the seat of the injection portion is substantially tubular and forms a non-return valve with the needle (3).

4. An electromagnetic injector as claimed in any one of the preceding claims, characterized in that the moving member (2) is formed by a circular plate (2a) and a piston (2b) made rigid with one another and in that one end of the piston (2b) cooperates with an end of the seat (4) of the injection portion in order to form a means for opening and closing the passage for the pressurized gas from an annular chamber (5e) communicating with the first input (5b) to the injection portion.

5. An electromagnetic injector as claimed in one of the preceding claims, characterized in that it further comprises assembly means allowing it to be fastened to a support (6).

6. Use of the injector as set out in any one of the preceding claims for the injection of a gas either directly or indirectly into a combustion chamber of an internal combustion engine.

7. A method of optimizing the combustion of a fuel in a combustion chamber of an internal combustion engine by the use of at least one injector according to one of claims 1 to 5, for the injection, at a time determined by the engine operating cycle, of a predetermined quantity of pressurized gas in order to create a local or global turbulence in the combustion chamber and/or to modify the local richness of the fuel in the chamber.

8. Use of the injector as set out in any one of claims 1 to 5 for the injection of an air and fuel mixture.
